# EUROPÄISCHE PATENTSCHRIFT

(11) **EP 2 886 329 B1**
(45) Veröffentlichungstag und Bekanntmachung des Hinweises auf die Patenterteilung: **09.06.2021**
(21) Anmeldenummer: 13199378.4
(22) Anmeldetag: 23.12.2013
(51) Int. Cl.: B32B 7/06, B32B 27/08, B32B 27/30, B32B 27/32, B32B 27/36, B65D 77/20, B32B 27/16, B65D 51/20

(54) **Verpackung sowie Verfahren zur Herstellung einer Verpackung**
Packaging and method for producing a packaging
Emballage et procédé de fabrication d'un emballage

(43) Veröffentlichungstag der Anmeldung: 24.06.2015
(73) Patentinhaber: Mondi AG, 1030 Wien (AT)
(72) Erfinder: Niepelt Ralf, 48599 Gronau (DE); Seifert Ulf, 48607 Ochtrup (DE); Buitenhuis Robert, 9462 Bad St. Leonhard (AT)
(74) Vertreter: Lorenz, Bernd Ingo Thaddeus

(56) Entgegenhaltungen:
- EP-A1- 2 361 749
- WO-A1-2005/037548
- US-A- 6 033 758
- US-A1- 2003 116 880
- US-B1- 6 248 442
- DATABASE WPI Week 199051 Thomson Scientific, London, GB; AN 1990-379943 -& JP H02 274529 A (MITSUBISHI PLASTICS IND LTD) 8 November 1990 (1990-11-08)

## Beschreibung

Die Erfindung betrifft eine Verpackung aus einer Schale und einer die Schale abdeckenden Deckfolie, wobei die Schale an die Deckfolie angrenzend eine Schicht aus Polyester aufweist und wobei die Deckfolie zumindest eine an die Schale angrenzende Siegelschicht aus einer polymeren Grundsubstanz aufweist und mit der Schale durch eine auftrennbare Siegelnaht verbunden ist. Gegenstand der Verbindung ist auch ein Verfahren zur Herstellung einer solchen Verpackung.

Derartige Verpackungen haben sich vor allem für die Aufnahme von Lebensmitteln bewährt, insbesondere wenn diese schnell verderblich sind und/oder gut abgedichtet gelagert werden sollen. Eine peelbare Heißsiegelnaht ermöglicht einen zuverlässigen Verschluss und ist gleichzeitig für den Endverbraucher einfach zu öffnen.

Aus DE 103 52 444 A1 ist eine gattungsgemäße Verpackung mit einer Folie bekannt, die als Deckfolie zusammen mit einer Schale verwendet werden kann, beispielsweise für Mikrowellenmenüs. Die Siegelschicht der Deckfolie weist einen Anteil Polyester und einen Anteil organische und/oder anorganische Partikel mit einem mittleren Durchmesser von 2 bis 8 µm auf. Eine Folie mit einer solchen Siegelschicht ist heißsiegelbar gegen PET, wobei die Heißsiegelnaht peelbar geöffnet werden kann. Bei dieser Ausgestaltung müssen die Partikel in den Polyester eingebracht werden. Der Aufwand, die Siegelschicht herzustellen, wird zudem erhöht, da die Schichtdicke der Siegelschicht in der Größenordnung des mittleren Partikeldurchmesser liegt. Außerdem schränkt der Einsatz von Partikeln die Verarbeitbarkeit der Deckschicht ein, da diese nicht aus einem Material mit kontinuierlichen Eigenschaften besteht, sondern aus einer heterogenen Mischung.

Die US 5 888 599 beschreibt eine gattungsgemäße Verpackung mit einer Schale und einer dreischichtigen Deckfolie, wobei eine außenliegende Siegelschicht der Deckfolie ein Basispolymer mit einem ersten Anteil PET und einem zweiten polymeren Anteil, basierend auf einer Dicarbonsäure, einem Diol oder einer Mischung der beiden Substanzklassen, aufweist. Eine an die Siegelschicht angrenzende Zwischenschicht ist aus einem Polymer auf Basis von Acrylsäure, Methacrylsäure oder einem Ester dieser beiden Verbindungen aufgebaut. Die Verwendung von Polymeren auf Basis von Acrylsäure, wie für die Zwischenschicht beschrieben, ist unter Berücksichtigung der gesundheitsschädlichen Eigenschaften der Monomere unvorteilhaft. Außerdem sind die hier beschriebenen Rohstoffe kostenintensiv.

Eine gattungsgemäße Verpackung ist ebenso aus EP 1 397 249 B1 bekannt, gemäß welcher eine mehrschichtige Deckfolie aus thermoplastischem Kunststoff mit einer Siegelschicht, die eine niedrige Siegelanspringtemperatur aufweist, offenbart wird. Die Deckfolie kann gegen verschiedene Materialien wie PP, PE, PVC, PS oder PET heißgesiegelt werden. Ebenfalls beschrieben ist die Verwendung der Deckfolie in Verbindung mit einer Schale als Verpackung. Die Folie weist zumindest eine erste Zwischenschicht und eine auf die Zwischenschicht aufgebrachte Siegelschicht auf. Die erste Zwischenschicht enthält ein Terpolymer, welches aus einem Olefin, einer ungesättigten Carbonsäure bzw. deren Ester und einer anderen (zweiten) ungesättigten Carbonsäure bzw. deren Ester oder Anhydrid aufgebaut ist. Die Siegelschicht enthält einerseits ein Copolymer aus einem Olefin und einer ungesättigten Carbonsäure bzw. deren Ester und andererseits einen Zusatzstoff. Diese mehrschichtige Struktur geht auf die Erfahrung zurück, dass Polyolefine nicht gut gegen Polyester siegeln und keine peelbare Siegelnaht ausbilden, weshalb die Siegelschicht ein Copolymer mit Zusatzstoffen aufweist. Nachteilig ist bei dieser Ausführungsform allerdings, dass der Aufbau der Folie kompliziert ist, da die einzelnen Schichten der Deckfolie, jeweils aus einem Co- bzw. Terpolymer aufgebaut sind und die beschriebenen Materialien teuere Rohstoffe darstellen.

Vor diesem Hintergrund liegt der Erfindung die Aufgabe zugrunde, eine Verpackung mit eine Schale und mit einer Deckfolie zu verwirklichen, wobei die Schale eine Schicht aus Polyester aufweist, und wobei die Deckfolie mit der Schale durch eine auftrennbare Heißsiegelnaht verbunden ist und wobei die Deckfolie möglichst kostengünstig und aus einfachen Rohstoffen aufgebaut ist.

Ausgehend von einer Verpackung mit den eingangs beschriebenen Merkmalen wird die Aufgabe dadurch gelöst, dass die Siegelschicht eine polymere Grundsubstanz aufweist, die zumindest 20 Gew.-% Polyethylen einer Dichte kleiner 0,92 g/cm³ aufweist und dass die Siegelschicht an der auf die Schale aufgesiegelten Seite der Deckfolie eine durch Corona-Behandlung modifizierte Oberfläche aufweist.

Ein durch Metallocen-Katalyse hergestelltes lineares Polyethylen niedriger Dichte (PE-LLDm) ist für die Verwendung im Rahmen dieser Erfindung besonders gut geeignet ist.

Es ist bekannt, aneinandergrenzende Polyolefinschichten von Folien so auszugestalten, dass eine Verbindung in Form einer Heißsiegelnaht peelbar, d. h. ohne Zerstörung der Folien, vorhanden ist. Ein solcher Verbund ist beispielsweise in WO 2006/042856 beschrieben. Nach praktischen Erfahrungen kann jedoch eine Schicht auf Basis von Polyethylen nicht gut gegen Polyester gesiegelt werden.

Überraschenderweise führen Deckfolien mit einer erfindungsgemäßen Siegelschicht aus einer polymeren Grundsubstanz, die zumindest 20 Gew.-% Polyethylen einer Dichte kleiner 0,92 g/cm³ enthält, und wobei die Oberfläche die gegen den Polyester gesiegelt werden soll durch Corona-Behandlung modifiziert wurde dazu, dass derartige Siegelschichten gegen Polyester peelbar gesiegelt werden können. Dies ist überraschend, da eine Corana-Behandlung bei einem Polyethylen-Polyethylen-Verbund zu einer Herabsetzung der Siegelfähigkeit bzw. Siegelfestigkeit führt.

Zur Corona-Behandlung kann eine Oberfläche beispielsweise zwischen zwei als Elektroden dienenden Leiterelementen hindurchgeführt werden, wobei zwischen den Elektroden eine so hohe Spannung angelegt ist, dass Corona-Entladungen stattfinden. Durch die Corona-Entladungen wird die Luft oberhalb der Folienoberfläche ionisiert, wobei ionisierte Moleküle der Luft mit Polymermolekülen der Folienoberflächen reagieren, und wobei durch Anlagerung von Ionen und/oder eine teilweise Spaltung der Polymermoleküle polare Bereiche auf der im Wesentlichen unpolaren Folienoberfläche entstehen, wodurch es zu einer Erhöhung der Oberflächenspannung kommt. Erfindungsgemäß ist vorgesehen, dass die durch Corona-Behandlung modifizierte Oberfläche als Siegelschicht eine Oberflächenspannung zwischen 38 und 50 dyn/cm aufweist.

Über die Intensität der Corona-Behandlung kann die Oberflächenspannung gezielt eingestellt werden. Ohne Corona-Behandlung werden für die Siegelschicht nur sehr geringe Siegelfestigkeiten erreicht. Besonders starke Corona-Behandlungen birgt allerdings die Gefahr, dass die Siegelschicht beschädigt werden kann. Zusätzlich kann die Corona-Konstanz durch Zugabe von Maleinsäureanhydrid zur Siegelschicht verbessert werden.

Die Oberflächenspannung ist gemäß ISO 15989 bestimmt. Siegelversuche haben gezeigt, dass für gute Siegelfestigkeiten bzw Peelwerte die Oberflächenspannung der Siegelschicht zwischen 38 und 50 dyn/cm (10⁻³ N/m - Newton pro Meter), besonders bevorzugt zwischen 44 und 48 dyn/cm beträgt.

Auch eine genaue Einstellung und ggf. Erniedrigung der Siegelfestigkeit ist im Rahmen der Erfindung möglich. Durch einen Verschnitt der polymeren Grundsubstanz der Siegelschicht mit anderen Polyethylen-Typen kann die Siegelfestigkeit eingestellt, insbesondere verringert werden.

Durch die zuvor genannten Modifikationen der Siegelschicht kann die Siegelfestigkeit in einem weiten Bereich auf die Erfordernisse gezielt abgestimmt und frei gewählt werden. So z. B. kann für Verpackungen, die hohen mechanischen Belastungen ausgesetzt sind, eine besonders hohe Siegelfestigkeit gewählt werden.

Die Siegelfestigkeit ist auch von der Siegeltemperatur abhängig. In diesem Zusammenhang zeichnet sich die erfindungsgemäße Siegelschicht durch ein breites Siegelfenster bezogen auf die Siegeltemperatur aus. Als Siegelfenster wird dabei der Temperaturbereich bezeichnet, in dem die Siegelfestigkeit innerhalb eines vorgegebenen Bereichs liegt. Im Allgemeinen steigt die Siegelfestigkeit mit zunehmender Siegeltemperatur. Es ist für die technische Umsetzung der Herstellung allerdings günstig, dass Schwankungen der Siegeltemperatur im Wesentlichen zu der selben Siegelfestigkeit führen. Da der Einfluss der Temperatur auf die Siegelfestigkeit gering ausfällt, ist die Reproduzierbarkeit der Siegelnahteigenschaften bei Temperaturschwankungen verbessert. Für die Herstellung bedeutet dies, dass bei Temperaturschwankungen der Siegeltemperatur die Siegelnahtfestigkeit in einem vorgegebenen Bereich liegt. Dadurch kann die Produktion vereinfacht werden und/oder der Durchsatz der Produktion erhöht werden.

Zur Messung der Siegelfestigkeit kann beispielsweise eine an die DIN 55529 angelehnte Prüfvorschrift verwendet werden, wobei ein Teststreifen aus Deckfolie und Grundschicht (aus dem Material der Schale) bereitgestellt wird, und in einem Bereich von 150 x 5 mm heißgesiegelt wird, wobei mindestens 20 mm ungesiegelte (freie) Enden verbleiben. Die Teststreifen werden in 95 x 15 mm große Stücke zerteilt, so dass die Heißsiegelnaht in etwa mittig entlang der Breite verläuft. Die freien Enden der Grundschicht werden auf einem Rad befestigt und ein freies Ende der Deckfolie wird an einer Zugvorrichtung befestigt, wodurch die Deckfolie mit einer konstanten Geschwindigkeit von 200 mm pro Minute in einem Winkel von 90° abgezogen wird. Die Peelkraft wird durch Messung der Öffnungskraft beim Abziehen bestimmt und in Newton pro 15 mm entsprechend der Breite des ausgestanzten Probekörpers angegeben. Im Rahmen der Erfindung soll eine Peelkraft zwischen 2 und 15 Newton pro 15 mm Probenbreite erreicht werden. Aus einer solchen Messung können neben der Peelkraft auch das Peelverhalten durch Fetzenbildung oder Schichtentrennung, bewertet werden.

Unter Polyethylen sind im Rahmen der Erfindung auch Copolymere aus Ethylen und anderen Alpha-Olefinen mit einer Kettenlänge von 4 bis 8 Kohlenstoffatomen gemeint. Die Auswahl des Copolymers und insbesondere die Wahl der eingesetzten Monomere beeinflussen die Eigenschaften der Siegelschicht, was im Rahmen dieser Erfindung relevant ist. Als besonders günstig hat sich hierbei ein Copolymer aus Ethylen und 1-Octen herausgestellt, weil eine Siegelschicht aus diesem Copolymer bereits bei einem relativ geringen Anteil an 1-Octen gute Siegeleigenschaften zeigt, insbesondere ein breites Fenster bezüglich der Siegeltemperatur. Die Siegelnahtfestigkeit ist bei Verwendung eines derartigen Copolymers maßgeblich von der Zusammensetzung des Copolymers abhängig. Ein Anteil von 25 % 1-Octen kann beispielsweise zur Ausbildung einer peelbaren Siegelschicht ausreichen. Durch unterschiedliches Abmischen des Copolymers sind sowohl Siegelnahtfestigkeit, als auch Siegeltemperatur gut einstellbar, wobei das Temperaturfenster, in dem ein gewisser Siegelnahtfestigkeitsbereich erreicht wird, durch die Charakteristik des Copolymers besonders groß ist.

Neben der Dichte ist der mittlere Schmelzflussindex (MFI) eine im Rahmen der Erfindung relevante Materialkenngröße. Der MFI dient der Charakterisierung des Fließverhaltens eines Polymers und kann nach ISO 1133 mittels eines Kapillarrheometers ermittelt werden. Dabei wird das zu prüfende Material in einem beheizbaren Zylinder bei einer vorgegebenen konstanten Temperatur aufgeschmolzen und unter Druck eines Prüfgewichts durch eine definierte Düse gedrückt. Die Messungen im Rahmen der Erfindung beziehen sich auf eine Temperatur von 190 °C und ein Prüfgewicht von 2,16 kg. Der MFI gibt die austretende Masse der Polymerschmelze (des sogenannten Extrudats) bezogen auf eine bestimmte Zeit an. Im Rahmen der Erfindung ist für das Polyethylen der Siegelschicht ein MFI zwischen 1,0 und 3,0 g pro 10 Minuten besonders bevorzugt. Bei einem zu hohen MFI besteht die Gefahr des Verblockens wenn die Deckfolie auf Rollen aufgewickelt gelagert wird.

Die Deckfolie kann neben der erfindungsgemäßen Siegelschicht noch weitere Schichten aufweisen, wobei die Deckfolie, oder zumindest ein Teil der Schichen der Deckfolie dann mittels Coextrusion hergestellt sein können. Bei mehrschichtigen Deckfolien können zusätzlich Haftvermittlerschichten vorhanden sein, die vorzugsweise Maleinsäureanhydrid (beispielsweise in Mischung mit Polyethylen) enthalten. Ebenso kann eine Barriereschicht, insbesondere gegen Sauerstoff, vorhanden sein, wobei diese vorzugsweise auf Ethylenvinylalkohol (EVOH) basiert. Gerade für die Verpackung von verderblichen Lebensmitteln ist die Verwendung von Sauerstoffbarriereschichten zweckmäßig, um die Haltbarkeit und Qualität der aufgenommen Lebensmittel bestmöglich zu gewährleisten.

Für die Deckfolie kann auch noch eine zusätzliche Schicht vorgesehen sein, vorzugsweise aus orientiertem PET (OPET), die beispielsweise durch einen lösemittelfreien oder lösemittelbasierten Zwei-Komponentenkleber aufkaschiert ist. Anstelle von OPET kann auch biaxialgeregtes Polypropylen (BOPP) eingesetzt werden.

Die Schale ist zumindest aus einer Polyesterschicht aufgebaut, die an die Siegelschicht der Deckfolie angrenzt, wobei als Polyester hier bevorzugt PET, besonders bevorzugt amorphes PET (APET) zum Einsatz kommt. Ein Vorteil von APET liegt u. a. in einer hohen Lichtdurchlässigkeit und einer guten Formstabilität, weshalb sich derartige Schalen besonders zur Aufnahme von Lebensmitteln eignen. Im Rahmen der Erfindung ist die Schale in der Regel aus einer ebenen Tiefziehfolie tiefgezogen.

Gegenstand der Erfindung ist auch ein Verfahren zur Herstellung einer Verpackung gemäß Anspruch 13. Die Deckfolie wird an einer ersten Oberfläche der Siegelschicht, die an die Schale angrenzt, durch eine Corona-Behandlung modifiziert. Die Deckfolie kann zusätzliche Schichten aufweisen, wobei in diesem Fall die Deckfolie bzw. ein Teil der Schichten der Deckfolie durch Coextrusion hergestellt sind. Ebenso kann die Deckfolie im Rahmen der Erfindung an der nichtsiegelbaren Oberfläche aufkaschierte Schichten aufweisen, vorzugsweise aus OPET. Die Deckfolie wird nach der Corona-Behandlung an der ersten Oberfläche unter Bildung einer Siegelnaht gegen die Polyesterschicht der Schale gesiegelt.

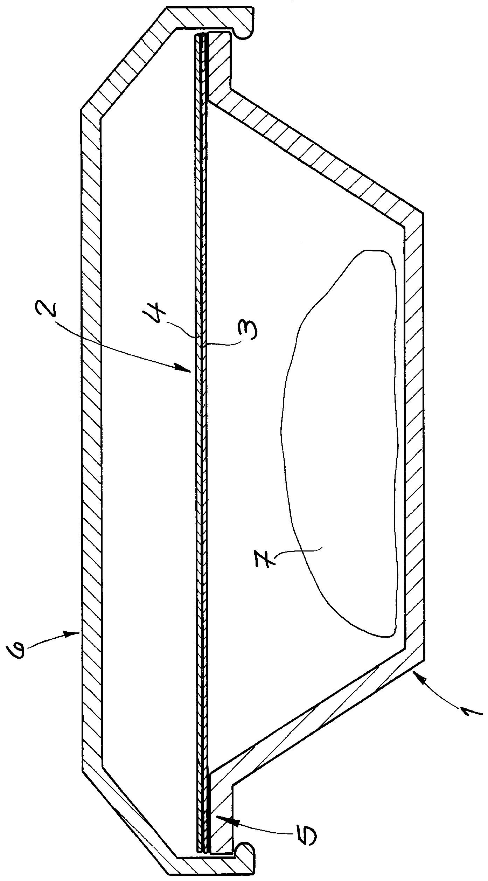

Anhand einer Abbildung wird ein Ausführungsbeispiel der Erfindung gezeigt:
In der einzigen Figur ist ein Ausführungsbeispiel der Verpackung im Querschnitt dargestellt. Diese zeigt eine Tiefziehschale 1, die mit einer Deckfolie 2 abgedeckt ist, wobei die Deckfolie 2 einen Kaschierverbund einer coextrudierten Coextrusionsfolie 3 mit einer aufkaschierten Außenschicht 4 aufweist, wobei die aufkaschierte Außenschicht 4 aus OPET besteht. Die Coextrusionsfolie 3 weist eine fünfschichtige Struktur auf. Angrenzend an die Schale 1 weist die Coextrusionsfolie 3 als erste Schicht eine 20 µm dicke Siegelschicht auf, gefolgt von einer 5 µm dicken Schicht aus PE und MAH. Danach folgt eine 5µm dicke Schicht, welche EVOH enthält. Darauf folgt eine 5µm dicke Schicht aus Polyethylen und MAH. Abgeschlossen wird die Coextrusionsfolie durch eine 15µm Schicht, die PE enthält. Die Siegelschicht bildet entlang des abgeflachten Randes der Schale 1 eine Siegelnaht 5 aus. Zusätzlich zeigt die Figur noch einen Deckel 6, der über einen Snap-on-Verschluss am Rand der Schale fixiert ist und sich über die Deckfolie erstreckt. Dadurch kann die Deckfolie gegen mechanische Belastung oder die ungewollte Beschädigung geschützt werden. Die Abbildung zeigt auch schematisch die aufgenommene Ware 7.

## Patentansprüche

1. Verpackung mit einer Schale (1) und einer die Schale (1) abdeckenden Deckfolie (2), wobei die Schale (1) an die Deckfolie (2) angrenzend eine Schicht aus Polyester aufweist und wobei die Deckfolie (2) zumindest eine an die Schale (1) angrenzende Siegelschicht aus einer polymeren Grundsubstanz aufweist und mit der Schale durch eine auftrennbare Heißsiegelnaht (5) verbunden ist, **dadurch gekennzeichnet, dass** die Grundsubstanz mindestens 20 Gew.-% Polyethylen einer Dichte kleiner 0,92 g/cm³ aufweist und dass die Siegelschicht an der auf die Schale (1) aufgesiegelten Seite der Deckfolie (2) eine durch Corona-Behandlung modifizierte Oberfläche aufweist, wobei die durch Corona-Behandlung modifizierte Oberfläche der Siegelschicht eine Oberflächenspannung zwischen 38 und 50 dyn/cm gemäß ISO 15989 aufweist.

2. Verpackung gemäß Anspruch 1, **dadurch gekennzeichnet, dass** der Polyethylenanteil der Grundsubstanz, welche eine Dichte kleiner 0,92 g/cm³ aufweist, einen gemäß ISO 1133 bei einer Temperatur von 190°C und einem Prüfgewicht von 2,16 kg bestimmten mittleren Flussindex (MFI) von 1,0 bis 3,0 g/ 10 Min. aufweist.

3. Verpackung gemäß Anspruch 1 oder 2, **dadurch gekennzeichnet, dass** der Polyethylenanteil der Grundsubstanz, welche eine Dichte kleiner 0,92 g/cm³ aufweist, ein Metallocen - katalysiertes lineares Polyethylen niedriger Dichte (PE-LLDm) ist.

4. Verpackung gemäß einem der Ansprüche 1 bis 3, **dadurch gekennzeichnet, dass** der Polyethylenanteil der Grundsubstanz, welche eine Dichte kleiner 0,92 g/cm³ aufweist, ein Copolymer aus Ethylen und einem weiteren Olefin ist, wobei das zweite Olefin eine Kettenlänge von 4 bis 8 Kohlenstoffatomen aufweist.

5. Verpackung gemäß Anspruch 4, **dadurch gekennzeichnet, dass** das zweite Olefin eine Kettenlänge von 8 Kohlenstoffatomen aufweist.

6. Verpackung gemäß einem der Ansprüche 1 bis 5, **dadurch gekennzeichnet, dass** die Siegelschicht vollständig aus Polyolefin besteht.

7. Verpackung gemäß einem der Ansprüche 1 bis 6, **dadurch gekennzeichnet, dass** die an die Deckfolie (2) angrenzende Schicht der Schale (1) amorphes PET (APET) aufweist.

8. Verpackung gemäß einem der Ansprüche 1 bis 7, **dadurch gekennzeichnet, dass** die Deckfolie (2) eine Barriereschicht auf Basis von Ethylenvinylalkohol (EVOH) enthält.

9. Verpackung gemäß einem der Ansprüche 1 bis 8, **dadurch gekennzeichnet, dass** die Deckfolie (2) mindestens zwei durch Coextrusion hergestellte Schichten aufweist.

10. Verpackung gemäß einem der Ansprüche 1 bis 9, **dadurch gekennzeichnet, dass** die Heißsiegelnaht (5) eine bei einem Abzug der Deckfolie (2) von der Schale (1) unter 90° bestimmte Öffnungskraft zwischen 2 und 15 Newton pro 15 mm aufweist.

11. Verpackung gemäß einem der Ansprüche 1 bis 10, **dadurch gekennzeichnet, dass** die Schale (1) tiefgezogen ist.

12. Verfahren zur Herstellung einer Verpackung aus einer Schale (1) und einer Deckfolie (2) gemäß einem der Ansprüche 1 bis 11, das folgende Schritte beinhaltet:
Zuführen einer Schale, die zumindest eine außenliegende Polyesterschicht aufweist;
Zuführen einer Deckfolie (2), die an einer ersten Oberfläche eine Siegelschicht aus einer polymeren Grundsubstanz mit mindestens 20 Gew.-% Polyethylen einer Dichte kleiner 0.92 g/cm³ aufweist,
Modifikation der ersten Oberfläche der Deckfolie (2) durch Corona-Behandlung, wobei die durch Corona-Behandlung modifizierte Oberfläche der Siegelschicht eine Oberflächenspannung zwischen 38 und 50 dyn/cm gemäß ISO 15989 aufweist;
Siegeln der Corona-behandelten ersten Oberfläche der Deckfolie (2) gegen die Polyesterschicht der Schale (1).

## Claims

1. A packaging comprising a shell (1) and a cover film (2) covering the shell (1), wherein the shell (1) has a layer of polyester adjacent to the cover film (2) and wherein the cover film (2) has at least one sealing layer made of a polymeric basic substance adjacent to the shell (1) and is connected to the shell by a separable heat sealing seam (5), **characterized in that** the basic substance comprises at least 20 wt.% of polyethylene having a density of less than 0.92 g/cm³ and that on the side of the cover film (2) sealed onto the shell (1) the sealing layer has a surface modified by corona treatment, wherein the surface of the sealing layer modified by corona treatment has a surface tension between 38 and 50 dyn/cm in accordance with ISO 15989.

2. The packaging according to Claim 1, **characterized in that** the polyethylene fraction of the basic substance which has a density of less than 0.92 g/cm³, has a mean flow index (MFI) of 1.0 to 3.0 g/10 min. determined in accordance with ISO 1133 at a temperature of 190 °C and a test weight of 2.16 kg.

3. The packaging according to Claim 1 or 2, **characterized in that** the polyethylene fraction of the basic substance which has a density of less than 0.92 g/cm³, is a low-density metallocene-catalyzed linear polyethylene (PE-LLDm).

4. The packaging according to one of Claims 1 to 3, **characterized in that** the polyethylene fraction of the basic substance which has a density of less than 0.92 g/cm³, is a copolymer of ethylene and a further olefin, wherein the second olefin has a chain length of 4 to 8 carbon atoms.

5. The packaging according to Claim 4, **characterized in that** the second olefin has a chain length of 8 carbon atoms.

6. The packaging according to one of Claims 1 to 5, **characterized in that** the sealing layer consists completely of polyolefin.

7. The packaging according to one of Claims 1 to 6, **characterized in that** the layer of the shell (1) adjoining the cover film (2) comprises amorphous PET (APET) .

8. The packaging according to one of Claims 1 to 7, **characterized in that** the cover film (2) contains a barrier layer based on ethylene vinyl alcohol (EVOH).

9. The packaging according to one of Claims 1 to 8, **characterized in that** the cover film (2) comprises at least two layers produced by coextrusion.

10. The packaging according to one of Claims 1 to 9, **characterized in that** the heat sealing layer (5) has an opening force between 2 and 15 Newtons per 15 mm determined during a withdrawal of the cover film (2) from the shell (1) at 90 .

11. The packaging according to one of Claims 1 to 10, **characterized in that** the shell (1) is deep drawn.

12. A method for producing a packaging from a shell (1) and a cover film (2) according to one of Claims 1 to 11, which includes the following steps:
supplying a shell which has at least one external polyester layer;
supplying a cover film (2) which on a first surface has a sealing layer of a polymeric basic substance comprising at least 20 wt.% of polyethylene having a density of less than 0.92 g/cm³,
modifying the first surface of the cover film (2) by corona treatment, wherein the surface of the sealing layer modified by corona treatment has a surface tension between 38 and 50 dyn/cm in accordance with ISO 15989;
sealing the corona-treated first surface of the cover film (2) towards the polyester layer of the shell (1).

## Revendications

1. Emballage comprenant une coque (1) et un film de revêtement (2) couvrant la coque (1), dans lequel la coque (1) présente une couche de polyester adjacente au film de revêtement (2) et dans lequel le film de revêtement (2) présente au moins une couche de scellement adjacente à la coque (1) dans une substance de base polymère et est relié à la coque par un cordon thermo-soudé (5) séparable, **caractérisé en ce que** la substance de fond présente au moins 20 % en poids de polyéthylène d'une densité inférieure à 0,92 g/cm³ et que la couche de scellement présente sur le côté du film de revêtement (2) soudé sur la coque (1), une surface modifiée par traitement corona, dans lequel la surface modifiée par traitement corona de la couche de scellement présente une tension de surface entre 38 et 50 dyn/cm selon la norme ISO 15989.

2. Emballage selon la revendication 1, **caractérisé en ce que** la teneur en polyéthylène de la substance de base, qui présente une densité inférieure à 0,92 g/cm³, présente un indice de fluidité moyen (MFI) de 1,0 à 3,0 g/10 min. selon la norme ISO 1133 à une température de 190 °C et un poids d'essai de 2,16 kg.

3. Emballage selon la revendication 1 ou 2, **caractérisé en ce que** la teneur en polyéthylène de la substance de base, qui présente une densité inférieure à 0,92 g/cm³, est un polyéthylène linéaire catalysé par métallocène de densité inférieure (PE-LLDM).

4. Emballage selon l'une des revendications 1 à 3, **caractérisé en ce que** la teneur en polyéthylène de la substance de base, qui présente une densité inférieure à 0,92 g/cm³, est un copolymère d'éthylène et une oléfine supplémentaire, dans lequel la seconde oléfine présente une longueur de chaîne de 4 à 8 atomes de carbone.

5. Emballage selon la revendication 4, **caractérisé en ce que** la seconde oléfine présente une longueur de chaîne de 8 atomes de carbone.

6. Emballage selon l'une des revendications 1 à 5, **caractérisé en ce que** la couche de scellement est entièrement en polyoléfine.

7. Emballage selon l'une des revendications 1 à 6, **caractérisé en ce que** la couche de la coque (1) adjacente au film de revêtement (2) présente du PET amorphe (APET).

8. Emballage selon l'une des revendications 1 à 7, **caractérisé en ce que** le film de revêtement (2) contient une couche barrière à base d'éthylène alcool vinylique (EVOH).

9. Emballage selon l'une des revendications 1 à 8, **caractérisé en ce que** le film de revêtement (2) présente au moins deux couches produites par coextrusion.

10. Emballage selon l'une des revendications 1 à 9, **caractérisé en ce que** le cordon thermo-soudé (5) présente une force d'ouverture entre 2 et 15 newton/15 mm définie en-dessous de 90° lors d'un retrait du film de revêtement (2) de la coque (1).

11. Emballage selon l'une des revendications 1 à 10, **caractérisé en ce que** la coque (1) est emboutie.

12. Procédé de fabrication d'un emballage composé d'une coque (1) et d'un film de revêtement (2) selon l'une des revendications 1 à 11, qui comprend les étapes suivantes :
amenée d'une coque qui présente au moins une couche de polyester extérieure ;
amenée d'un film de revêtement (2) qui présente sur une première surface une couche de scellement d'une substance de base polymère présentant au moins 20 % en poids de polyéthylène d'une densité inférieure à 0,92 g/cm³,
modification de la première surface du film de revêtement (2) par traitement corona, dans lequel la surface modifiée par traitement corona de la couche de scellement présente une tension de surface entre 38 et 50 dyn/cm selon la norme ISO 15989 ;
scellement de la première couche du film de revêtement (2) ayant subi un traitement corona contre la couche de polyester de la coque (1).
